# EUROPEAN PATENT APPLICATION

(11) **EP 4 818 076 A1**
(43) Date of publication of application: **07.10.2026**
(21) Application number: 24909471.5
(22) Date of filing: 25.04.2024
(51) Int. Cl.: B65G 1/04

(54) **TRANSMISSION SYSTEM AND INTELLIGENT THREE-DIMENSIONAL WAREHOUSING TRANSMISSION SYSTEM**

(30) Priority: 29.12.2023 CN 202311860633
(71) Applicant: Libiao Robotics Holdings Pte. Ltd., 608521 Singapore (SG)
(72) Inventor: ZHU, Jianqiang, Hangzhou, Zhejiang 311199 (CN)
(74) Representative: Ottazzo, Marco Francesco Agostino
(86) International application number: PCT/CN2024/089877
(87) International publication number: WO 2025/138503

(57) **Abstract**

A transmission system and an intelligent three-dimensional warehousing transmission system, which are used for a three-dimensional warehouse. The three-dimensional warehouse comprises at least a plurality of columns of goods shelves (10), and the goods shelves comprise a first goods shelf section (1001) and a second goods shelf section (1002). The goods shelves are provided with a multi-layer storage space, and goods containers are placed in storage locations of the storage space. The first goods shelf section and the second goods shelf section can be located on the same goods shelf or can be located on goods shelves on two sides of the same roadway. The first goods shelf section and the second goods shelf section can be provided with task modules (1003, 1004), among which at least one task module can access a plurality of locations of containers in an adjacent goods shelf section, and the task modules can be a sorting task module or a retrieval and transmission task module. Thus, the utilization of warehousing space for existing goods shelf transmission systems is achieved, the complexity of deployment and maintenance for high-altitude warehousing is reduced, and the investment costs for deployment are greatly reduced.

## Description

### Cross-reference to Related Applications

The present invention claims priority to Chinese Patent Application No. 2023118606335, filed with the China National Intellectual Property Administration on December 29, 2023, and entitled "*Transmission system and intelligent three-dimensional warehousing transmission system*", which is incorporated herein by reference in its entirety.

### Technical Field

The present invention relates to the technical field of automated warehousing transportation, and in particular, to a transport system and an intelligent stereoscopic warehousing transport system.

### Background Art

Warehousing is a stage having highest logistics cost. Existing warehousing systems require construction of a warehousing base or a warehousing center. Modern logistics uses a warehouse to store goods under environmental conditions, and achieves fulfillment outbound operations according to SKU, date, and sequence information under instruction of a logistics order.

From an existing cargo warehouse to sorting, goods are removed from a warehouse rack through a warehousing freight robot, and then the warehousing freight robot transports goods to a sorting table or a sorting system. A conventional warehousing height is typically only 10 meters. When a warehouse height reaches a higher value, warehousing transportation and exchange efficiencies are limited by the warehousing height, and a dedicated and customized transport system or picking system is required to participate, resulting in high deployment complexity and extremely high configuration cost.

### Summary

Embodiments of the present invention provide a transport system and an intelligent stereoscopic warehousing transport system, which improve warehousing space utilization rate, goods inbound and outbound speed, and sorting efficiency of an existing transport system, and greatly reduce investment cost of warehousing deployment.

A transport system is provided for a stereoscopic warehouse, where the stereoscopic warehouse at least includes a plurality of columns of racks, each rack includes a first rack section and a second rack section, the rack is provided with a plurality of tiers of reservation units, and a bin is placed at a slot of each reservation unit; the first rack section and the second rack section can be located on a same rack, or can be located on racks at two sides of a same aisle; the first rack section and the second rack section can be equipped with task modules, where at least one of the task modules can access a plurality of bin slots of adjacent rack sections; and the task module can be a picking task module or a storage-retrieval-and-transport task module.

Optionally, according to the system, partitions of one or more slots are removed from a lowest tier of rack, providing an autonomous mobile robot as a passage; or one or more tiers of racks are removed to provide a matching height, supporting a freight robot in operation on the ground.

Optionally, an aisle direction of the plurality of columns of racks in the system is designated as x-axis, a direction perpendicular to the x-axis on the ground is designated as y-axis, and a height direction of the rack is designated as z-axis.

Optionally, the arrangement of adjacent rack sections is specifically implemented as: two rack sections along the z-axis direction on the same rack; or two rack sections along the y-axis direction on two sides of the aisle.

Optionally, the system further includes: an extension module, where the extension module is slidably mounted on a movable member of the task module, such that the task module is extendable in the z-axis direction to access more bin slots of adjacent rack sections.

Optionally, the extension module includes one or more laminate sliders, and an extension distance is obtained through laminate arrangement.

Optionally, accessing the plurality of bin slots of the adjacent rack sections is implemented by a track transport device, wherein the track transport device is specifically implemented on the rack as: a first transverse track, a first upright, a first movable member, and a connecting mechanism for the second task module; when the task module is a bin store/retrieve module, the connecting mechanism of the second task module is provided with a support structure for the bin store/retrieve module; and a conveying component for the bin store/retrieve module; and the first rack section and the second rack section can be equipped with task modules, where at least one of the task modules can access a plurality of bin slots of adjacent rack sections, specifically implemented as: a bin store/retrieve module installed on a track transport device of the first rack section can access one or more slots at an end portion of the second rack section in the z-axis direction, or can access one or more slots of the second rack section in the y-axis direction.

Optionally, goods are placed into a docking assembly or a docking bin of a freight robot operating at a bottom of the rack by a goods picking device, or removed from the docking assembly or the docking bin and placed into the bin; the arrangement of the goods picking device on the rack is specifically implemented as a first transverse track, a first upright, a first movable member, and a connecting mechanism for a first task module, wherein the first transverse track is disposed on the rack; the first upright is vertically disposed on the first transverse track and is transversely slidable; the first movable member is disposed on the first upright and is slidable along the first upright; and the connecting mechanism for the first task module is disposed on the first movable member.

Optionally, the system further includes: a second transverse track, located at a lower portion of the rack, where the two transverse tracks are connected to the first upright via sliders; the sliders move along the transverse tracks under the driving of rollers and/or gears, and the rollers and/or gears are driven by a motor.

Optionally, according to the system, the track transport device, also referred to as the storage and retrieval task module or the equipment in an automated storage and retrieval system (AS/RS), arranged on the rack further includes: a second upright and a second movable member, where the second upright is vertically disposed on the transverse track and is transversely slidable; the second movable member is disposed on the upright and is slidable along the second upright; and the connecting mechanism for the second task module is disposed on the second movable member.

Optionally, the track transport device arranged on the rack further includes: a third upright, where the second task module is disposed between the second upright and the third upright via the connecting mechanism; the second task module is driven to be positioned at a goods slot or a docking position on the rack.

Optionally, the system includes a synchronous pulley driven by a motor and controlled by a reducer, where the synchronous pulley drives a synchronous belt to support movement of the first movable member along a track of the first upright; and a synchronous pulley driven by a motor and controlled by a reducer, where the synchronous pulley drives a synchronous belt to support movement of the second movable member along a track of the second upright.

Optionally, the system further includes: an identification module, where the identification module can be disposed on the goods picking device and/or the track transport device.

Optionally, the freight robot is an autonomous guide vehicle (AGV).

Optionally, a freight robot and/or a load handling device is provided on a top of the stereoscopic warehouse, where the load handling device cooperates with a lifting apparatus, and the lifting apparatus grabs the bin or goods; the load handling device is configured to move at the top of the stereoscopic warehouse and to lift and move the bin or goods within the stereoscopic warehouse; and the load handling device includes an electric control device and a driving and/or lifting component, and a receiving space component for accommodating the bin or goods, where the lifting component is configured to lift and lower the lifting apparatus relative to the receiving space component.

Optionally, a freight robot AGV walking face can be deployed at a top of the stereoscopic warehouse, and/or a first set of parallel tracks and a second set of parallel tracks are arranged on the top of the stereoscopic warehouse, where the second set of parallel tracks is transversely extended relative to the first set of parallel tracks on a substantially horizontal plane, forming a grid structure including a plurality of grid spaces.

Optionally, the freight robot in the system is a warehouse robot, including: a mobile base, a mast vertically provided on the mobile base, and a store/ retrieve apparatus provided on the mast and vertically liftable.

An intelligent stereoscopic warehousing transport system includes the one or more transport systems described above.

The transport system provided in embodiments of the present invention is applied in a high-bay stereoscopic warehouse. Within a rack in the stereoscopic warehouse, a task module is equipped on a rack section, and a plurality of bin slots of adjacent rack sections are accessed by the task module, where the task module can be a picking task module or a storage-retrieval-and-transport task module. The task modules can allow the task modules to reach slots beyond the current rack section in a high-bay warehouse through cooperation of transverse tracks, sliding on uprights, and extension modules, thereby supporting fulfillment operations in a high-bay stereoscopic warehouse. Furthermore, using the track transport device, bins are stored and/or retrieved under the driving of the movable members and placed into a docking assembly or a docking bin of a freight robot operating at a bottom of the rack, or removed from the docking assembly. This configuration can enable coordination between stored goods/bins and the freight robot or a sorting robot, so that the goods storage, goods/bin transportation, and goods/bin sorting are smoothly completed within the warehouse space. This achieves improved utilization of the warehouse space in the existing rack transport system, reduces the complexity of deployment and maintenance of high-bay warehousing, and significantly lowers the deployment and investment cost.

### Brief Description of Drawings

To describe the technical solutions in specific implementations of the present invention or in the prior art more clearly, the following briefly describes the accompanying drawings for describing specific implementations or the prior art. It is clear that the accompanying drawings in the following descriptions show merely some embodiments of the present invention, and those of ordinary skill in the art can still derive other drawings from these accompanying drawings without creative efforts.
FIG. 1 is a schematic diagram of a structure of a rack according to an embodiment of the present invention;
FIG. 2 is a schematic diagram of a structure of a freight robot according to an embodiment of the present invention;
FIG. 3 is a schematic diagram of a structure of a transport system according to an embodiment of the present invention;
FIG. 4 is a schematic diagram of a structure of a transport system according to an embodiment of the present invention;
FIG. 5 is a schematic diagram of a front-view structure of a transport system according to an embodiment of the present invention;
FIG. 6 is a schematic diagram of a side-view structure of a transport system according to an embodiment of the present invention;
FIG. 7 is a schematic diagram of a structure of a track transport device of a warehouse rack according to an embodiment of the present invention;
FIG. 8 is a schematic diagram of a structure of a track transport device of a warehouse rack according to an embodiment of the present invention;
FIG. 9 is a schematic diagram of a structure of a track transport device of a warehouse rack according to an embodiment of the present invention;
FIG. 10 is a schematic diagram of a partial structure of a rack in a transport system according to an embodiment of the present invention;
FIG. 11 is a schematic diagram of a structure of a goods picking device according to an embodiment of the present invention;
FIG. 12 is a schematic diagram of a structure of a transport system according to an embodiment of the present invention;
FIG. 13 is a schematic diagram of a structure of a transport system according to an embodiment of the present invention;
FIG. 14 is a schematic diagram of a structure of a transport system according to an embodiment of the present invention;
FIG. 15 is a schematic diagram of a structure of a transport system according to an embodiment of the present invention; and
FIG. 16 is a schematic diagram of a structure of an intelligent stereoscopic warehousing transport system according to an embodiment of the present invention.

### Detailed Description of Embodiments

To make the objectives, technical solutions, and advantages of embodiments of the present invention clearer, the following clearly and completely describes the technical solutions in embodiments of the present invention with reference to the accompanying drawings in embodiments of the present invention. It is clear that the embodiments described are some rather than all of embodiments of the present invention. The components of the embodiments of the present invention, as generally described and illustrated in the figures herein, can be arranged and designed in a wide variety of different configurations.

Therefore, the following detailed description of the embodiments of the present invention provided in the accompanying drawings is not intended to limit the scope of the present invention as claimed but is merely representative of selected embodiments of the present invention. All other embodiments obtained by those of ordinary skill in the art based on embodiments of the present invention without creative efforts shall fall within the protection scope of the present invention.

It should be noted that similar reference numerals and letters indicate similar items in the following drawings, and therefore, once an item is defined in one of the drawings, no further definition or explanation is required in the following drawings.

In the description of the present invention, it should be noted that terms such as "upper", "lower", "vertical", "horizontal", "inner", "outer", or the like indicate positional or orientational relationships based on the orientations or positions shown in the drawings or based on the orientations or positions customarily used when the product of the present invention is placed during use. These terms are provided merely for facilitating the description of the present invention and simplifying the description and are not intended to indicate or imply that the referenced devices or elements must have specific orientations, or must be constructed or operated in specific orientations, and therefore these terms should not be construed as limiting the present invention. In addition, the terms "first", "second", and "third" are used only for distinguishing descriptions and should not be construed as indicating or implying relative importance.

In addition, terms such as "horizontal" and "vertical" do not indicate that components are required to be absolutely horizontal or suspended, and the components can be slightly inclined. For example, the term "horizontal" merely indicates that a direction is more horizontal relative to "vertical", and does not indicate that the structure must be completely horizontal, and the structure can be slightly inclined.

In the description of the present invention, it should also be noted that, unless otherwise explicitly specified or limited, the terms "provide", "install", and "connect" should be understood in a broad sense. For example, the terms can refer to fixed connection, detachable connection, or integral connection; can refer to mechanical connection or electrical connection; can refer to direct connection or indirect connection through an intermediate medium; and can also refer to communication between two components internally. Those of ordinary skill in the art can interpret specific meanings of the foregoing terms in the present invention according to specific cases.

The following describes some embodiments of the present invention in detail with reference to the accompanying drawings. The following embodiments and features of the embodiments can be mutually combined in the case of no conflict.

An embodiment of the present invention provides a transport system, which improves warehousing space utilization rate, goods inbound and outbound speed, and sorting efficiency of an existing transport system, and greatly reduces investment cost of warehousing deployment.

First, it should be clarified that the internal height of a warehouse is typically categorized into different levels based on storage capacity and design. These levels mainly depend on the design of the warehouse, the type of racking system or other handling devices used, and the type of goods stored. The following are some common warehouse height classifications.

Low-bay warehouse: typically has a height less than 6 meters. This type of warehouse is suitable for manual handling or basic forklift operations.

Medium-bay warehouse: typically has a height between 6 meters and 12 meters. This type of warehouse is suitable for use with stacker cranes and some automated storage systems.

High-bay warehouse: has a height exceeding 12 meters, sometimes even reaching 20 meters or higher. This type of warehouse is typically used with highly automated storage and retrieval systems (AS/RS) to maximize space utilization.

Ultra-high-bay warehouse: is a less common type, with a height potentially exceeding 30 meters. These warehouses heavily depend on highly automated and sophisticated logistics management systems.

A conventional warehousing height is typically only 10 meters. When a warehouse height reaches a higher value, that is, when the warehouse meets the high-bay warehouse standard or even the ultra-high-bay warehouse standard, the warehousing transportation and exchange efficiencies are limited by the warehousing height, and a dedicated and customized transport system or picking system is required to participate, resulting in high deployment complexity and extremely high configuration cost. To solve this problem, the present invention provides a transport system.

For clarity and convenience of description, the transport system involved in this specification at least includes: a warehouse rack and a plurality of freight robots.

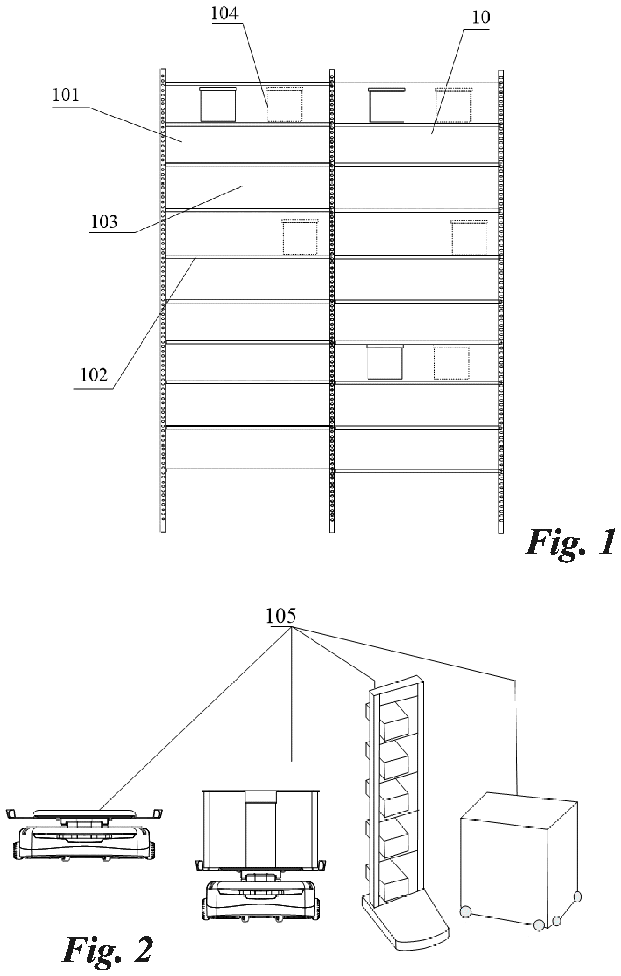

FIG. 1 is a structural diagram of a warehouse rack, where the rack 10 is configured for warehousing. The rack 10 includes a plurality of tiers of reservation units 101, and bins 104 are placed in slots 103 of the reservation units 101. The rack 10 transversely provides support for the bins 104 via the partitions 102.

It should be noted that the rack is generally assembled from uprights, beams, and tiers. An independent set of racks includes two uprights and a plurality of beams (tiers). When a plurality of sets of racks is assembled into a column of racks, only the first set of racks requires two uprights, and other sets of racks can share one upright with a previous set of racks. This arrangement can save space and reduce costs. For example, two independent single sets of racks require four uprights. However, when the two sets of racks are formed into a column of racks, only three uprights are required. The second set of racks is attached to the first rack of racks and therefore is referred to as an attachment rack (or an auxiliary rack).

Based on this, a coordinate system in the present invention is defined as follows: an aisle direction of the plurality of columns of racks is defined as x-axis, a direction perpendicular to the x-axis on the ground is defined as y-axis, and a height direction of the rack is defined as z-axis.

Referring to FIG. 2, a plurality of freight robots 105 can dock bins and/or goods.

In an implementable embodiment, the freight robots can be an automated guided vehicle (AGV), commonly referred to as an AGV vehicle; or an autonomous mobile robot (AMR). The specific form is not limited and can refer to the illustration shown in FIG. 2.

A freight robot and/or a load handling device is provided on a top of the stereoscopic warehouse, where the load handling device cooperates with a lifting apparatus, and the lifting apparatus grabs bins or goods; the load handling device is configured to move at the top of the stereoscopic warehouse and to lift and move the bins or goods within the stereoscopic warehouse; and the load handling device includes an electric control device and a driving and/or lifting component, and a receiving space component for accommodating the bin or goods, where the lifting component is configured to lift and lower the lifting apparatus relative to the receiving space component.

A freight robot AGV walking face can be deployed at a top of the stereoscopic warehouse, and/or a first set of parallel tracks and a second set of parallel tracks are arranged on the top of the stereoscopic warehouse, where the second set of parallel tracks is transversely extended relative to the first set of parallel tracks on a substantially horizontal plane, forming a grid structure including a plurality of grid spaces.

In addition, the freight robot is a warehouse robot, including: a mobile base, a mast vertically provided on the mobile base, and an access apparatus provided on the mast and vertically liftable, that is, a high-mast movable load-carrying robot.

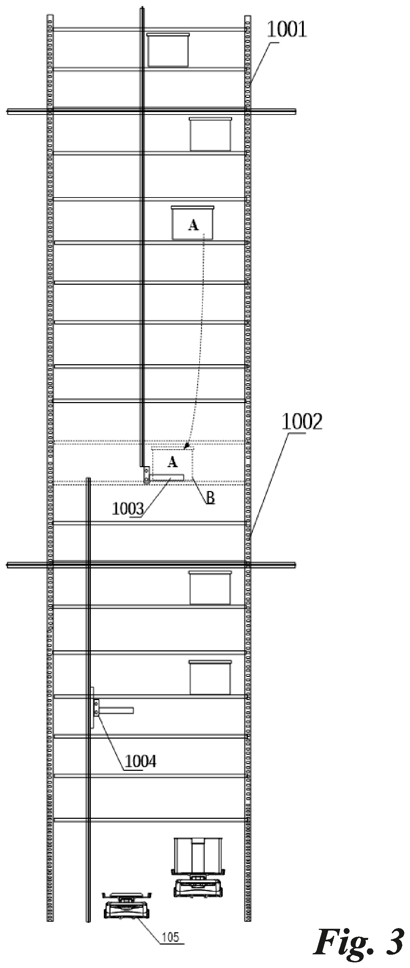

Referring to FIG. 3, the rack 10 includes a first rack section 1001 and a second rack section 1002.

The first rack section 1001 and the second rack section 1002 can be located on the same rack or can be located on racks 10 on two sides of the same aisle.

The first rack section 1001 and the second rack section 1002 can be equipped with task modules 1003 and 1004, where at least one of the task modules can access a plurality of bin slots of adjacent rack sections.

The task module can be a picking task module or a storage-retrieval-and-transport task module.

It should be noted that the arrangement of the adjacent rack sections is specifically implemented as two rack sections along the z-axis direction on the same rack; or two rack sections along the y-axis direction on two sides of the aisle.

Referring to FIG. 3, the first rack section 1001 and the second rack section 1002 are located on the same side of the same rack. After being equipped with a task module 1003, the first rack section 1001 can reach one or more bin slots at an upper end portion of the second rack.

During transfer of a target bin A by the task module, when the target bin A is located on a higher tier of a high-bay rack, the task module 1003 on the first rack section 1001 extracts the target bin A and lowers the target bin A to a lower end portion of the first rack section 1001. In this case, the z-axis height of the target bin A corresponds to an upper end portion of the second rack section 1002. Therefore, the task module 1003 on the first rack section 1001 can place the target bin A into a target bin slot B at the upper end of the second rack section 1002. When the target bin A participates in fulfillment outbound, the target bin A can be directly extracted from the target bin slot B by the task module 1004 of the second rack section 1002.

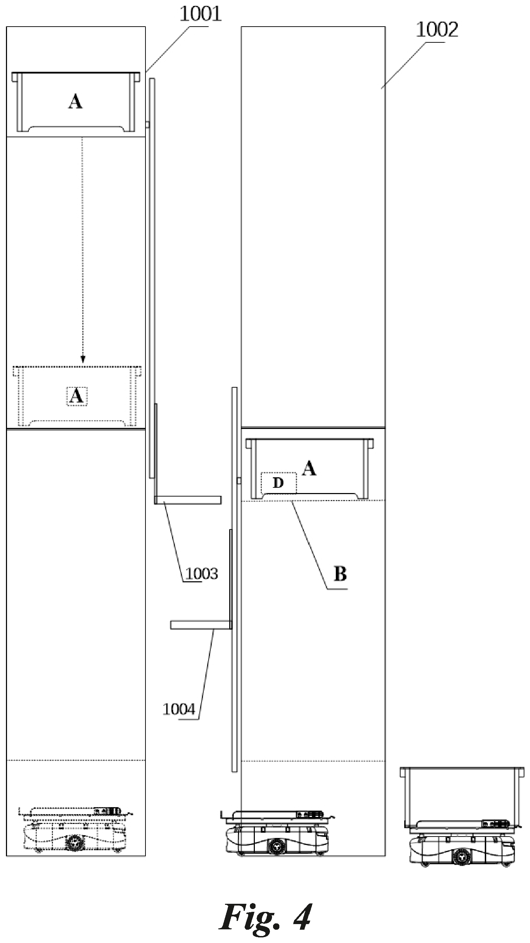

Referring to FIG. 4, the first rack section 1001 and the second rack section 1002 are located on opposite sides of an aisle. After being equipped with a task module 1003, the first rack section 1001 can reach one or more bin slots at an upper end portion of the second rack. During transfer of a target bin A by the task module, when the target bin A is located on a higher tier of a high-bay rack, the task module 1003 on the first rack section 1001 extracts the target bin A and lowers the target bin A to a lower end portion of the first rack section 1001. In this case, the z-axis height of the target bin A corresponds to an upper end portion of the second rack section 1002. Therefore, the task module 1003 on the first rack section 1001 can actually place the target bin A into a target bin slot B at the upper end of the second rack section 1002. When the target bin A participates in fulfillment outbound, the target bin A can be directly extracted from the target bin slot B by the task module 1004 of the second rack section 1002.

In a picking scenario, the task module 1003 on the first rack section 1001 extracts the target bin A and lowers the target bin A to the lower end portion of the first rack section 1001. In this case, the position of the target bin A corresponds to the upper end portion of the second rack section 1002. When the target bin A participates in fulfillment picking outbound, the target goods D of the target bin A can be directly extracted from the target bin slot by the task module 1004 of the second rack section 1002, where the task module can complete picking.

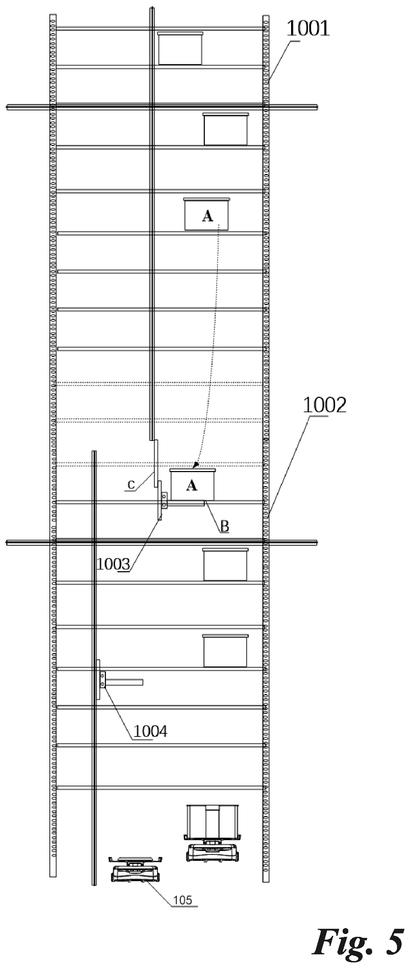

Referring to FIG. 5, a task module 1003 of a first rack section 1001 extracts a target bin A. When descending to access more bin slots at an upper end portion of a second rack section 1002 in a z-axis direction, an extension module C shown in the figure is adopted. The extension module C adopts a laminate slider form, or adopts a telescopic upright form, or adopts a form in which an extension section extends from an upright. For illustration, a laminate slider is used herein. With the assistance of a length of the laminate slider, the task module 1003 on the first rack section 1001 can move to more target bin slots at the upper end portion of the second rack section 1002 in the z-axis direction, so that the convenient operations for picking bins from a higher tier of a high-bay rack and for allocating slow-moving bins are facilitated.

It should be emphasized that the extension module C can be configured in multi-layer stacking, multi-joint sleeving, multi-joint releasing, or the like according to actual requirements to obtain a longer travel distance and access more bin slots in the z-axis direction. This is applicable to the embodiments corresponding to FIGS. 3 and 4.

It should be further noted that the first rack section 1001, the second rack section 1002, and the extension module C are all configured according to actual application requirements. The examples listed in the embodiments of the present invention are provided only to illustrate sufficient disclosure and the working principle, and do not imply that the positions or quantities of the first rack section 1001, the second rack section 1002, or extension module C are limited by the examples.

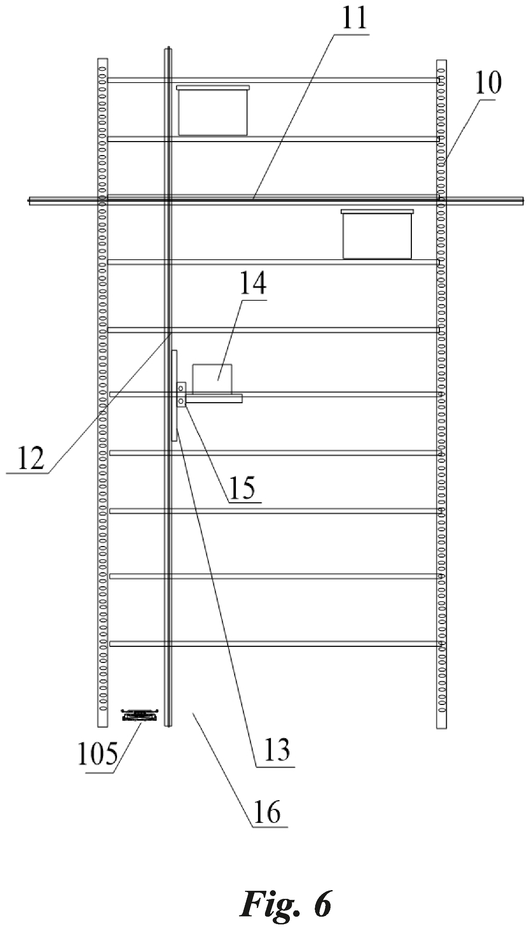

For clear description and sufficient disclosure, the structure of the track transport device in the transport system in the present invention is described with reference to FIG. 6. However, it should be noted that different transport devices can be adapted in different transport systems to implement the technical solutions of FIGS. 3 to 5. Therefore, the transport device disclosed in the present invention does not limit the scope of the invention. As an example, referring to FIG. 6, the track transport device disclosed in the present invention includes a transverse track 11, a first upright 12, a first movable member 13, and a connecting mechanism of a task module 14, where the transverse track 11 is provided on the rack 10.

It should be noted that the transverse track 11 is provided on a beam or an upright of the rack 10. When the length of the rack beam is relatively long, the transverse track 11 is provided by using a beam and an upright of a single rack and extends to a beam of an adjacent rack.

The first upright 12 is vertically provided on the transverse track 11 and can slide transversely.

The upright 12 slides transversely on the transverse track to enable the first movable member 13 to be positioned at each column of the warehouse rack.

The first movable member 13 is provided on the first upright 12 and can slide along the first upright 12.

With the above configuration, the first movable member 13 can move transversely and vertically to enable the first movable member 13 to be positioned at each tier of the rack.

A connecting mechanism 15 of the task module 14 is disposed on the first movable member 13.

The task module 14 is driven by the first movable member 13 to store and/or retrieve bins and/or goods, and to place the bins and/or goods into a docking assembly of a freight robot 105 operating at a bottom 16 of the warehouse rack.

The configuration enables the task module to, upon completing a single sorting operation and/or a storage and retrieval operation, transfer bins and/or goods through the docking assembly of the freight robot 105 to transport, sort, and deliver the goods to a target goods slot or a sorting slot, or even to a transport slot after sorting.

The task module 14 can be a component having one or more tasks including identification, extraction, repositioning, and grasping. The task module 14 is positioned at a slot of the rack under the driving of the first movable member 13, and the connecting mechanism of the task module serves as a basic structure capable of connecting with different task modules.

When the task module is a bin store/retrieve module, a supporting structure of the bin store/retrieve module, such as a loading and unloading rack, is provided; and a conveying component of the bin store/retrieve module, such as a conveyor belt, is provided, where the conveyor belt needs to be driven by a conveying motor.

However, for other task modules, a connecting member is provided according to a specific function of the task module. This is not limited thereto.

Through the above embodiment, a transverse track is provided on the warehouse rack for movement of uprights, and a movable member provided on the upright drives a task module to perform actions such as identification and storage/retrieval of bins. The device fundamentally solves the problem of wasted reservation units in conventional warehouse systems and avoids the need for freight robots or sorting robots to maintain excessive counterweight or impose high requirements on the warehouse floor to complete storage transportation or storage sorting operations.

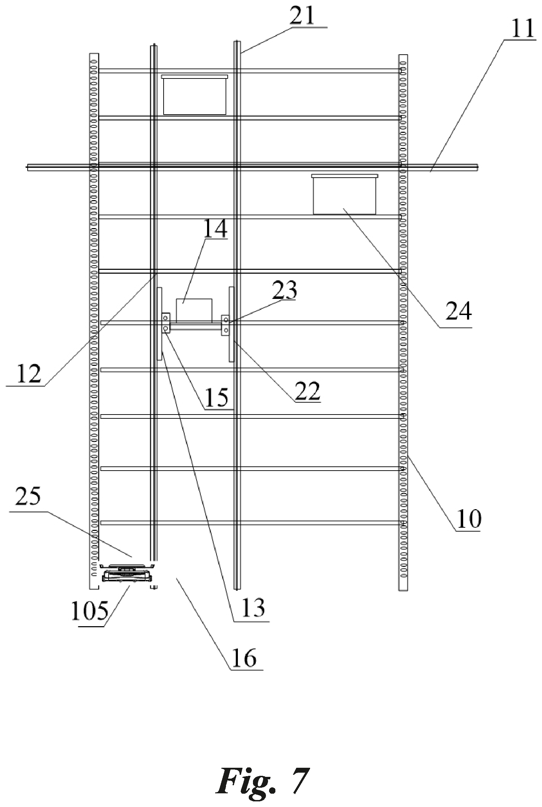

Referring to FIG. 7, a track transport device of a warehouse rack is shown, where, based on the illustration and descriptions of FIG. 6, the track transport device further includes a second upright 21 and a second movable member 22, where the second upright 21 is vertically provided on the transverse track 11 and can slide transversely.

The second movable member 22 is provided on the second upright 21 and can slide along the second upright.

A connecting mechanism 23 of the task module 14 is disposed on the second movable member 22.

The task module 14 is disposed between the first upright 12 and the second upright 21 through the connecting mechanism 23.

The first movable member 13 and the second movable member 22 drive the task module 14 to be positioned at a goods slot 24 or a docking position 25 on the warehouse rack 10.

The docking position 25 is a position where the task module 14, after storing and/or retrieving bins and/or goods from a goods slot of the rack, delivers the goods to the freight robot.

The bottom partition of the warehouse rack is removed to provide a matching height to support the autonomous mobile robot in operating on the floor and completing docking operations, and a bottom partition between adjacent uprights of the warehouse rack is removed to form the docking position 25 for the autonomous mobile robot.

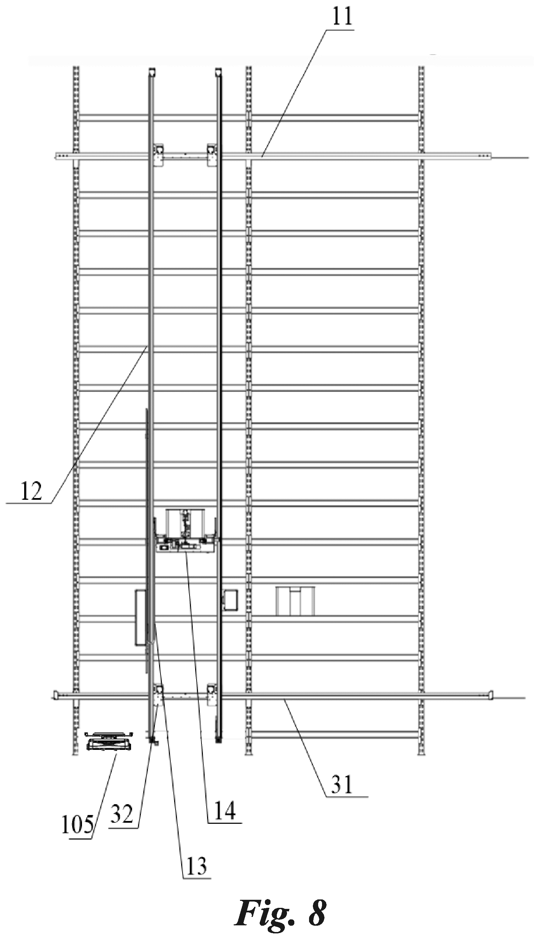

Referring to FIG. 8, a track transport device of a warehouse rack is shown. Based on the illustrations and corresponding descriptions of FIGS. 1 and 2, in FIG. 8, another transverse track 31 is provided at a lower portion of the warehouse rack 10. Both the transverse track 11 and the other transverse track 31 are connected to the first upright 12 and the second upright 21 through laminate sliders.

The laminate sliders move on the transverse tracks under the driving of rollers, and the rollers are driven by a motor.

It should be noted that the roller is a preferred embodiment. In practice, the movement of the uprights on the beams can be implemented by using gears, or a combination of gears and rollers. When the gears are used as the conveying means, a gear chain is required to complete the movement. The specific implementation can refer to prior art. In the case of a combination of gears and rollers, the gears engage with the gear chain to drive the rollers, thereby achieving movement of the uprights on the beams. Furthermore, a manner of operating the components by driving the rollers with the motor can be implemented through wired means (such as cables, flexible conductive materials, or wear-resistant wires), or through wireless means, such as rechargeable lithium batteries. The specific manner is not limited.

In this embodiment, for a large-scale rack system, a stable track transport device is required. For this purpose, upper and lower transverse tracks are provided on the track component to fully support the first upright 12 and the second upright 21, enabling reliable execution of tasks such as bin/goods retrieval and placement, docking, and sorting.

It should be noted that, in the embodiments illustrated in FIGS. 6-8, the freight robots operate on the floor at a lower end portion or on the top of the warehouse rack. In an implementable embodiment, the freight robots can be an automated guided vehicle (AGV), commonly referred to as an AGV vehicle; or an autonomous mobile robot (AMR). The specific form is not limited and can refer to the illustration shown in FIG. 2.

A freight robot and/or a load handling device is provided on a top of the stereoscopic warehouse, where the load handling device cooperates with a lifting apparatus, and the lifting apparatus grabs bins or goods; the load handling device is configured to move at the top of the stereoscopic warehouse and to lift and move the bins or goods within the stereoscopic warehouse; and the load handling device includes an electric control device and a driving and/or lifting component, and a receiving space component for accommodating the bin or goods, where the lifting component is configured to lift and lower the lifting apparatus relative to the receiving space component.

An autonomous mobile robot AGV walking face can be deployed at a top of the stereoscopic warehouse, and/or a first set of parallel tracks and a second set of parallel tracks are arranged on the top of the stereoscopic warehouse, where the second set of parallel tracks is transversely extended relative to the first set of parallel tracks on a substantially horizontal plane, forming a grid structure including a plurality of grid spaces.

In addition, the freight robot is a warehouse robot, including: a mobile base, a mast vertically provided on the mobile base, and a store/retrieve apparatus provided on the mast and vertically liftable, that is, a high-mast movable load-carrying robot.

Optionally, the autonomous mobile robot performs path planning under the control of a server, or autonomously performs path planning, and is provided with a planar movement component and a docking assembly supporting bin storage/retrieval and placement. To improve transportation efficiency, the autonomous mobile robot can operate directly on the floor at the location of the warehouse rack and cooperate with the rack by removing a bottom partition. Under the driving of the movable member, bins and/or goods to be stored/retrieved are placed onto the docking assembly of the automated guided vehicle. The autonomous mobile robot can be a freight robot or a sorting robot. The above cooperation enables goods storage, bin/goods transportation, and bin/goods sorting to be performed within the warehouse space.

In an implementation, a similar principle allows the movable members to move along rails of the uprights as illustrated, without limiting specific electro-control methods or requiring detailed illustration.

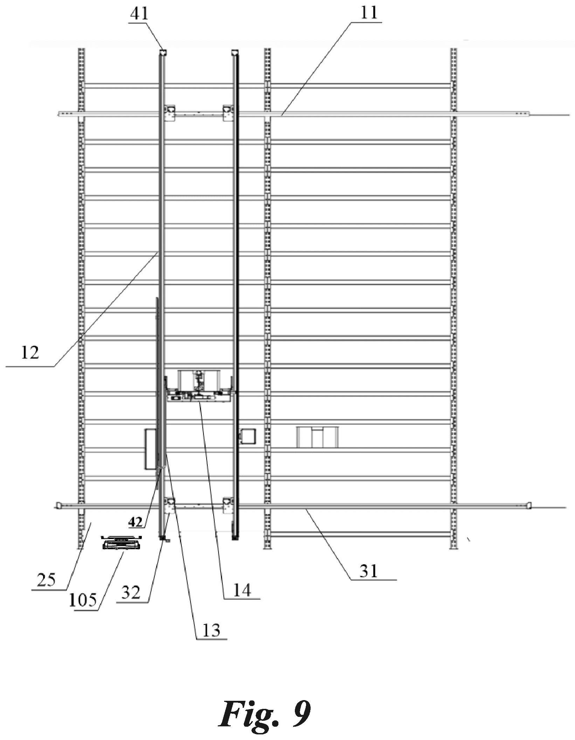

Referring to FIG. 9, a synchronous pulley driven by a motor 41 and controlled by a reducer drives a synchronous belt 42 to support movement of the first movable member along a track of the first upright.

A synchronous pulley driven by a motor and controlled by a reducer drives a synchronous belt to support movement of the second movable member along a track of the second upright.

The above configuration not only accurately positions the task module relative to the bins, but also significantly improves reservation unit utilization, goods inbound and outbound speed, and sorting efficiency of existing warehouse systems.

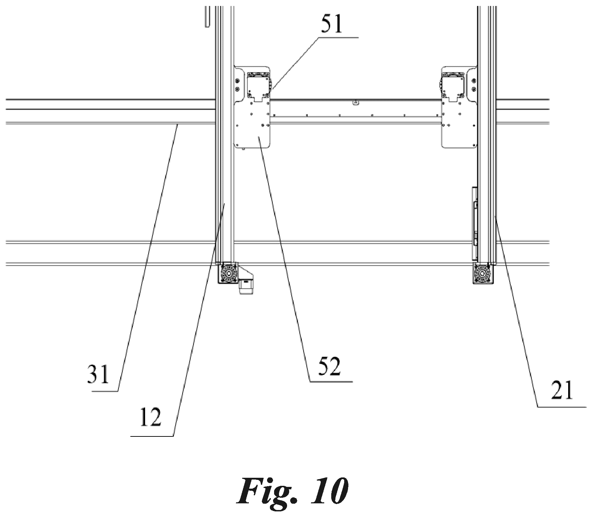

Referring to FIG. 10, a partial view of the rack of the transport system is shown.

In this embodiment, FIG. 5 shows a connection structure between the transverse track 11 and both the first upright 12 and the second upright 21. Referring to FIG. 10, the movement of the laminate slider 52 along the transverse track 31 can be implemented through a roller 51, the first upright 12 and the second upright 21 are sleeved onto the position of the laminate slider 52, and the roller 51 contacts the transverse track 31 to achieve smooth movement.

The above configuration can be one implementation and is not limited thereto.

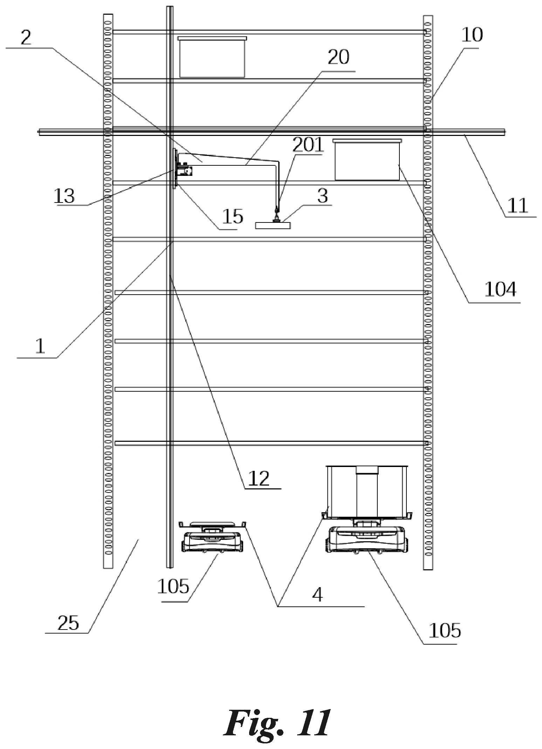

Referring to FIG. 11, a goods picking device 1 is installed on the rack, the goods picking device 1 drives a first task module 2 to place the goods 3 into a docking assembly or a docking bin 4 of a freight robot 105 operating at the bottom of the warehouse rack 10, or to remove goods from the docking assembly or the docking bin 4 and place the goods into a bin 104. The first task module 2 at least includes the first movable member 13 and a picking mechanism 20.

The arrangement of the goods picking device 1 on the warehouse rack 10 is specifically implemented as follows, including a transverse track 11, a first upright 12, a first movable member 13, and a connecting mechanism of the first task module 2, where the transverse track 11 is provided on the rack 10.

It should be noted that the transverse track 11 is provided on a beam or an upright of the rack 10. When the length of the rack in the transverse direction is relatively long, the transverse track is provided by using a beam and an upright of a single rack and extends to a beam of an adjacent rack.

The first upright 12 is vertically provided on the transverse track 11 and can slide transversely.

The upright 12 slides along the transverse track 11 to enable the first movable member 13 to be positioned at each column of the rack.

The first movable member 13 is provided on the first upright 12 and can slide along the first upright 12.

With the above configuration, the first movable member 13 can move transversely and vertically to enable the first movable member 13 to be positioned at each tier of the rack.

A connecting mechanism 15 of the first task module 2 is provided on the first movable member 13.

The first task module 2, under the driving of the first movable member 13, stores and/ or retrieves the goods 3 using the picking mechanism and places the goods into a docking assembly or a docking bin of the freight robot 105 operating at the bottom of the warehouse rack.

It should be particularly noted that, in the embodiments of the present invention, a bottom partition of the warehouse rack is removed. This partition represents a component that provides support for slots of various types of warehouse racks and stabilizes surrounding components of the beams. The removement of the partition to provide a matching height actually requires removing surrounding components that block the freight robot from operating on the floor. The partition is not limited to any specific material or style in the warehouse rack. The removal supports operation of the freight robot on the floor and completion of docking operations. A bottom partition between adjacent uprights of the warehouse rack is removed to form a docking position 25 for the freight robot. It should be further noted that the bottom partition of the rack includes the partition itself and the beam, thereby providing an activity space for the freight robot.

More specifically, the picking mechanism includes a suction mechanism 201 and/or a picking mechanism. The suction mechanism 201 and/or picking mechanism (not shown) is provided through the connecting mechanism 15 of the first task module, that is, via an extension member of the suction mechanism 201 and/or picking mechanism. The extension member is a multi-segment robotic arm with degrees of freedom connected to the first movable member 13. The suction mechanism 201 forms contact with the goods through suction force and maintains the contact until the goods 3 are placed into the docking assembly or docking bin of the freight robot operating at the bottom of the rack, or until the goods are removed from the docking assembly and placed into a bin.

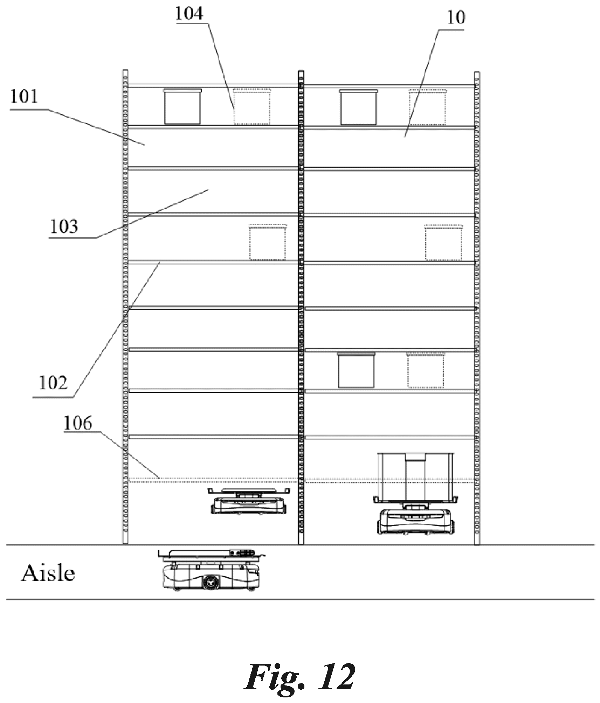

Referring to FIG. 12, in this embodiment, the configuration enables, upon completion of a sorting operation and/or storage/retrieval operation, the goods to be transferred, sorted, and delivered to a target goods slot, a sorting slot, or a transport slot after sorting through a docking assembly of the freight robot 105.

The partitions 102 of one or more slots of a lowest tier of the rack are removed to provide a passage for the freight robot 105.

One or more rack tiers 106 are removed to provide a matching height and support operation of the freight robot 105 on the floor.

In FIG. 12, an aisle for ground travel of the freight robot 105 between two racks is also illustrated.

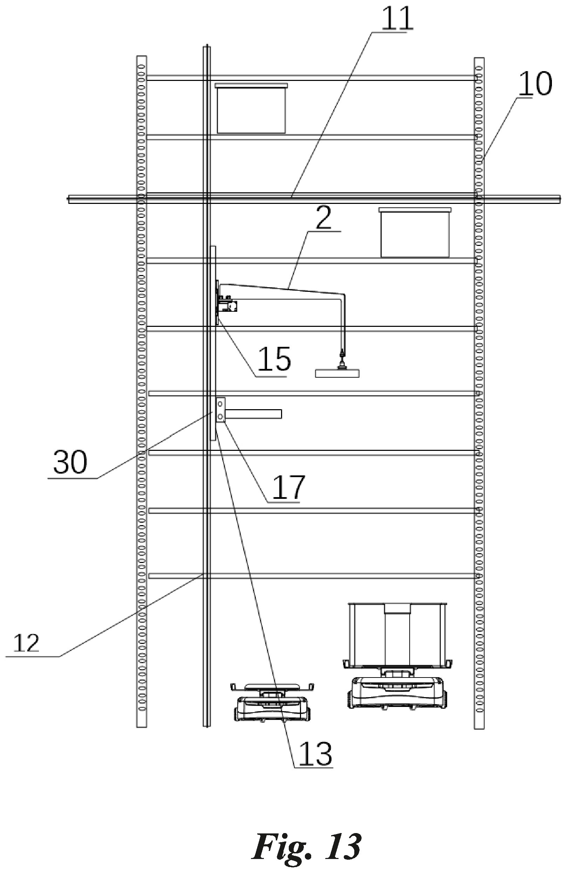

Referring to FIG. 13, when the first task module 2 and/or the second task module 14 are both installed on the first transverse track, the first upright, and the first movable member, the connecting mechanism of the first task module and the connecting mechanism of the second task module can be integrally provided to drive the first task module to sort goods and drive the second task module to store bins.

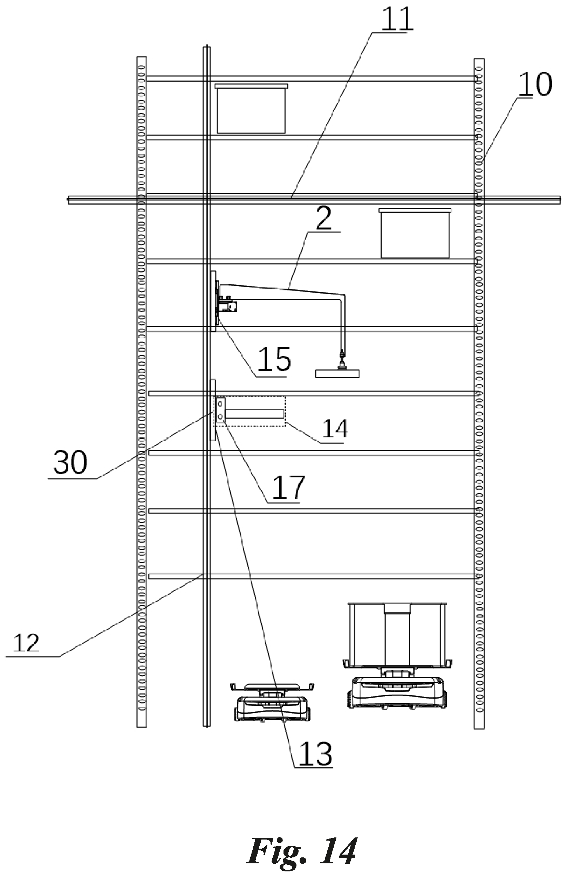

Referring to FIG. 14, in another case, when the first task module and/or the second task module are both installed on the first transverse track, the first upright, and the first movable member, the connecting mechanism of the first task module and the connecting mechanism of the second task module are separately provided to cooperate according to the current task.

When the task module is a bin store/retrieve module, the task module at least includes a supporting structure of the bin store/retrieve module, such as a loading and unloading rack; and a conveying component of the bin store/retrieve module, such as a conveyor belt, where the conveyor belt is driven by a conveying motor.

The track transport device pulls out a target bin at a target slot of a target rack using the bin store/retrieve module. The picking mechanism of the goods picking device system picks target goods from the target bin, enabling the goods picking device to drive the first task module to place the goods into a docking assembly or a docking bin of a freight robot operating at the bottom of the rack.

Alternatively, the picking mechanism of the goods picking device system removes target goods from the docking assembly or the docking bin of the freight robot. The track transport device pulls out a target bin at a target slot of a target rack using the bin store/retrieve module, and the picking mechanism places the target goods into the target bin.

The bin store/retrieve module pushes the target bin back.

It should be particularly noted that the store/retrieve module of the bin store/retrieve task module 14 can perform storage/retrieval operations on bins that are densely arranged, adjacent, or interlinked in a stereoscopic warehouse. For example, in the depth direction (y-axis), a store/retrieve arm of the bin store/retrieve task module can store and/or retrieve a specific bin among a plurality of bins.

In practical application, as described above, the connecting mechanism of the task module serves as a basic structure capable of connecting with different task modules. For other task modules, a connecting member is provided according to the specific function of the task module without limitation.

It should be particularly noted that, in this embodiment, by modifying bottom tiers of the rack and coordinating the goods picking device 1 with the freight robot 105 or a sorting robot (not shown), the problem of low efficiency in goods storage, bin/goods transportation, and sorting in conventional racks is fundamentally solved. This also extends the application scenarios of the rack, and enables goods storage, bin/goods transportation, and bin/goods sorting to be completed within the warehouse space, thereby significantly improving reservation unit utilization, goods inbound and outbound speed, and sorting efficiency of existing rack transport systems.

For sufficient disclosure, the freight robot can be selected from publicly disclosed freight robots or sorting robots. The freight robot performs path planning under server control or autonomously performs path planning and is provided with a planar movement component and a docking assembly supporting bin storage/retrieval and placement. To improve the transportation efficiency, the freight robot can operate directly on the floor beneath the rack and cooperate with the rack by removing a bottom partition. Under the driving of the movable member of the task module, goods are placed onto the docking assembly of the freight robot. The freight robot can be an autonomous mobile robot or a freight robot or sorting robot with a support frame or a retractable support frame. The above cooperation enables goods storage, bin/goods transportation, and bin/goods sorting to be completed within the warehouse space.

The above configuration can be implemented as disclosed in the present invention, not only to accurately position the task module relative to the bins, but also to significantly improve reservation unit utilization, goods inbound and outbound speed, and sorting efficiency of existing transport systems.

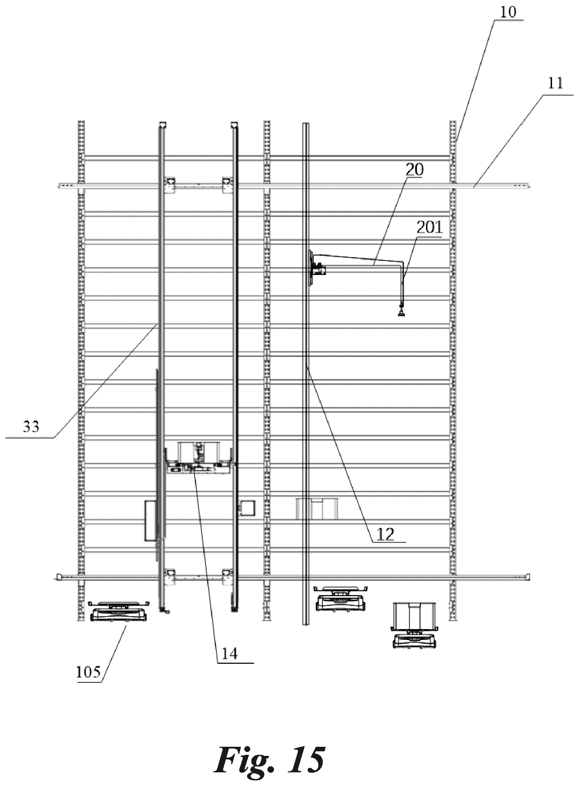

Referring to FIG. 15, the transport system is shown. The configuration of the track transport device on the rack further includes a third upright 33, and the second task module 14 is disposed between the second upright 21 and the third upright 33 through a connecting mechanism to drive the second task module 14 to be positioned at a goods slot or a docking position on the warehouse rack 10.

In this embodiment, the track transport device and the goods picking device are respectively provided on different uprights. In large-scale dense warehouse scenarios, for example, a warehouse storing more than 100,000 bins with a flow rate of 5,000 bins per hour, a plurality of the track transport devices and a plurality of goods picking devices can be installed on the same rack to accommodate high-volume order requirements. During cooperation between the track transport device system and the goods picking device system, taking order fulfillment as an example, if X goods of a specific order A or a certain stock keeping unit (SKU, a basic unit for measuring inventory inbound and outbound) need to be shipped, the track transport device pulls out a target bin at a target slot of the target rack using the second task module (i.e., the bin store/retrieve module), which enables the X goods to be accessed by the suction mechanism 201 and/or the picking mechanism of the goods picking device system. Before suction, the identification module identifies the X goods or the SKU. The identification module can be provided on the goods picking device and/or the track transport device. The identification module can be provided on the goods picking device and/or the track transport device. The identification module can be a monocular camera, a laser camera, or a depth-of-field camera.

After completion of the above picking process, the identification module accurately locates the X goods or the SKU indicated by the order, and the goods picking device places the X goods or SKU onto a docking position of the freight robot. The freight robot then moves to the next docking position or workstation.

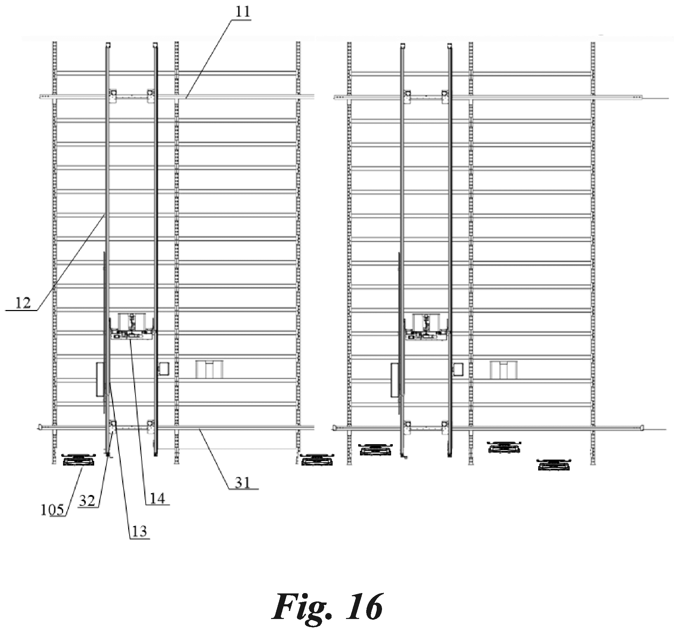

In another embodiment, the system includes one or more racks, the structure and operating principle of which refer to FIGS. 11 to 15. The racks can be configured with a goods picking device and/or a track transport device. During operation, one or more racks can be installed to support independent operation under the control of a control chip and software instructions or coordinated operation by warehouse management software built into a server. The one or more racks can be standard racks or precision racks and are not limited in the rack height or floor flatness. Additionally, the present invention further discloses a transport system configured as the transport system and a plurality of freight robots 105 of FIG. 16. Based on this configuration, the efficiency of goods storage/retrieval, transportation, and sorting can be further improved to meet rapid transfer and conveying technical requirements in various warehouse scenarios.

In summary, the transport system provided in embodiments of the present invention is applied in a high-bay stereoscopic warehouse. Within a rack in the stereoscopic warehouse, a task module is equipped on a rack section, and a plurality of bin slots of adjacent rack sections are accessed by the task module, where the task module can be a picking task module or a storage-retrieval-and-transport task module. The task modules can allow the task modules to reach slots beyond the current rack section in a high-bay warehouse through cooperation of transverse tracks, sliding on uprights, and extension modules, thereby supporting fulfillment operations in a high-bay stereoscopic warehouse. Furthermore, using the track transport device, bins are accessed under the driving of the movable members and placed into a docking assembly or a docking bin of a freight robot operating at a bottom of the rack, or removed from the docking assembly. This configuration can enable coordination between stored goods/bins and the freight robot or a sorting robot, so that the goods storage, goods/bin transportation, and goods/bin sorting are smoothly completed within the warehouse space. This achieves improved utilization of the warehouse space in the existing rack transport system, reduces the complexity of deployment and maintenance of high-bay warehousing, and significantly lowers the deployment and investment cost.

Although preferred embodiments of the present invention have been described, those skilled in the art, once aware of the basic inventive concept, can make other changes and modifications to these embodiments. Therefore, the appended claims are intended to be interpreted as including the preferred embodiments and all modifications and variations falling within the scope of the present invention.

It is apparent that those skilled in the art can make various modifications and variations to the present invention without departing from the spirit and scope of the present invention. Therefore, if such modifications and variations fall within the scope of the claims of the present invention and equivalent technologies of the present invention, the present invention intends to encompass such modifications and variations.

### Industrial Applicability

The above technical solution achieves improved utilization of the warehouse space in the existing rack transport system, reduces the complexity of deployment and maintenance of high-bay warehousing, and significantly lowers the deployment and investment cost.

## Claims

1. A transport system, applied to a stereoscopic warehouse, **characterized in that** the stereoscopic warehouse at least comprises a plurality of columns of racks, each rack comprises a first rack section and a second rack section, the rack is provided with a plurality of tiers of reservation units, and a bin is placed at a slot of each reservation unit;
the first rack section and the second rack section are located on a same rack, or located on racks at two sides of a same aisle;
the first rack section and the second rack section are equipped with task modules, wherein at least one of the task modules is configured to access a plurality of bin slots of adjacent rack sections; and
the task module is a picking task module or a storage-retrieval-and-transport task module.

2. The transport system according to claim 1, further comprising:
removal of partitions of one or more slots of a lowest tier of the rack to provide a passage for an autonomous mobile robot; or
removal of one or more rack tiers to provide a matching height and support operation of a freight robot on the ground.

3. The transport system according to claim 1 or 2, wherein an aisle direction of the plurality of columns of racks is designated as x-axis, a direction perpendicular to the x-axis on the ground is designated as y-axis, and a height direction of the rack is designated as z-axis.

4. The transport system according to claim 3, wherein an arrangement of adjacent rack sections is implemented as: two rack sections along the z-axis direction on the same rack; or two rack sections along the y-axis direction on two sides of the aisle.

5. The transport system according to any one of claims 1-4, further comprising: an extension module, wherein the extension module is slidably mounted on a movable member of the task module, such that the task module is extendable in the z-axis direction to access more bin slots of adjacent rack sections.

6. The transport system according to claim 5, wherein the extension module comprises one or more laminate sliders, and an extension distance is obtained through laminate arrangement.

7. The transport system according to claim 5, wherein the extension module is in a telescopic upright form, or in a form in which an extension section extends from an upright.

8. The transport system according to any one of claims 1-7, wherein accessing to the plurality of bin slots of adjacent rack sections is implemented by a track transport device, wherein:
the track transport device is implemented on the rack as: a first transverse track, a first upright, a first movable member, and a connecting mechanism for a second task module;
when the task module is a bin store/retrieve module, the connecting mechanism of the second task module is provided with:
a support structure for the bin store/retrieve module; and a conveying component for the bin store/retrieve module; and
the first rack section and the second rack section are equipped with the task modules, wherein at least one of the task modules accesses a plurality of bin slots of adjacent rack sections, implemented as: a bin store/retrieve module installed on a track transport device of the first rack section accesses one or more slots at an end portion of the second rack section in the z-axis direction, or accesses one or more slots of the second rack section in the y-axis direction.

9. The transport system according to claim 8, wherein goods are placed into a docking assembly or a docking bin of a freight robot operating at a bottom of the rack by a goods picking device, or removed from the docking assembly or the docking bin and placed into the bin; an arrangement of the goods picking device on the rack is implemented as:
a first transverse track, a first upright, a first movable member, and a connecting mechanism for a first task module, wherein
the first transverse track is disposed on the rack;
the first upright is vertically disposed on the first transverse track and is transversely slidable;
the first movable member is disposed on the first upright and is slidable along the first upright; and
the connecting mechanism of the first task module is disposed on the first movable member.

10. The transport system according to claim 8 or 9, wherein the first transverse track is disposed on a beam or an upright of the rack, so that the first transverse track extends to a beam of an adjacent rack through the beam or the upright of the rack.

11. The transport system according to any one of claims 8-10, further comprising: a second transverse track provided at a lower portion of the rack;
the two transverse tracks are connected to the first upright through a slider; and
the slider moves on the transverse tracks under driving of a roller and/or a gear, and the roller and/or the gear is driven by a motor.

12. The transport system according to any one of claims 8-11, wherein the track transport device arranged on the rack further comprises: a second upright and a second movable member, wherein the second upright is vertically disposed on the transverse tracks and is slidable transversely;
the second movable member is disposed on the upright and is slidable along the second upright; and
a connecting mechanism of the second task module is disposed on the second movable member.

13. The transport system according to claim 12, wherein the track transport device arranged on the rack further comprises: a third upright, and
the second task module is disposed between the second upright and the third upright via the connecting mechanism;
the second task module is driven to be positioned at a goods slot or a docking position on the rack.

14. The transport system according to claim 12 or 13, further comprising:
a synchronous pulley driven by a motor and controlled by a reducer, wherein the synchronous pulley drives a synchronous belt to support movement of the first movable member along a track of the first upright; and
a synchronous pulley driven by a motor and controlled by a reducer, wherein the synchronous pulley drives a synchronous belt to support movement of the second movable member along a track of the second upright.

15. The transport system according to any one of claims 1-14, further comprising: an identification module, wherein the identification module is disposed on a picking task module or a storage-retrieval-and-transport task module.

16. The transport system according to claim 2 or 9, wherein the freight robot is an autonomous mobile robot.

17. The transport system according to claim 2 or 9, wherein the freight robot is a sorting robot.

18. The transport system according to any one of claims 1-17, wherein a freight robot and/or a load handling device is provided on a top of the stereoscopic warehouse, the load handling device cooperates with a lifting apparatus, the lifting apparatus grabs the bin or goods, and the load handling device is configured to move at the top of the stereoscopic warehouse and to lift and move the bin or goods within the stereoscopic warehouse; and the load handling device comprises:
an electric control device and a driving and/or lifting component, and
a receiving space component for accommodating the bin or goods, wherein
the lifting component is configured to lift and lower the lifting apparatus relative to the receiving space component.

19. The transport system according to any one of claims 1-18, wherein an autonomous mobile robot walking face is deployed at a top of the stereoscopic warehouse, and/or a first set of parallel tracks and a second set of parallel tracks are arranged on the top of the stereoscopic warehouse, and the second set of parallel tracks is transversely extended relative to the first set of parallel tracks on a substantially horizontal plane, forming a grid structure comprising a plurality of grid spaces.

20. The transport system according to claim 2 or 9, wherein the freight robot is a warehouse robot, comprising: a mobile base, a mast vertically provided on the mobile base, and a store/retrieve apparatus provided on the mast and vertically liftable.

21. An intelligent stereoscopic warehousing transport system, **characterized by** comprising one or more transport systems according to any one of claims 1-20.
